# EUROPEAN PATENT SPECIFICATION

(11) **EP 4 596 161 B1**
(45) Date of publication and mention of the grant of the patent: **09.12.2026**
(21) Application number: 23871689.8
(22) Date of filing: 30.08.2023
(51) Int. Cl.: B23K 26/38

(54) **LAY-OUT DATA CREATION DEVICE, LAY-OUT DATA CREATION METHOD, AND LASER CUTTING METHOD**
VORRICHTUNG ZUR ERZEUGUNG VON LAYOUTDATEN, VERFAHREN ZUR ERZEUGUNG VON LAYOUTDATEN UND LASERSCHNEIDVERFAHREN
DISPOSITIF DE CRÉATION DE DONNÉES DE TRACÉ, PROCÉDÉ DE CRÉATION DE DONNÉES DE TRACÉ ET PROCÉDÉ DE DÉCOUPE LASER

(30) Priority: 28.09.2022 JP 2022154970
(43) Date of publication of application: 06.08.2025
(73) Proprietor: Amada Co., Ltd., Isehara-shi, Kanagawa 259-1196 (JP)
(72) Inventor: KASHIHARA, Masanobu, Isehara-shi, Kanagawa 259-1196 (JP); MURAKAMI, Takuya, Isehara-shi, Kanagawa 259-1196 (JP); SUBBAIAH, Sivakumar, Isehara-shi, Kanagawa 259-1196 (JP)
(74) Representative: Grünecker Patent- und Rechtsanwälte PartG mbB
(86) International application number: PCT/JP2023/031494
(87) International publication number: WO 2024/070449

(56) References cited:
- WO-A1-2022/168717
- CN-A- 106 583 943
- JP-A- 2019 171 413
- JP-A- H06 190 576
- JP-A- H06 218 445
- J.-Y. JUNG ET AL: "FEATURE-BASED NONCUTTING TOOL PATH SELECTION", JOURNAL OF MANUFACTURING SYSTEMS, SOCIETY OF MANUFACTURING ENGINEERS, DEARBORN, MI, US, vol. 13, no. 3, 1 January 1994 (1994-01-01), pages 165 - 176, XP000458453, ISSN: 0278-6125

## Description

### [TECHNICAL FIELD]

The present disclosure relates to a lay-out data creation device, a lay-out data creation method, and a laser cutting method.

### [BACKGROUND ART]

Patent Literature 1 discloses a processing system including a processing machine that performs laser cutting using a laser beam emitted from a processing head. The processing machine can cut out a product from a material by irradiating a laser beam along a cutting path laid out to an outline of the product.

In Patent Literature 2, it is pointed out that in laser cutting, when products or chips rise, they interfere with a machining head.

The preambles of claims 1 and 6 are based on JP 2019 171413 A.

### [Citation List]

### [Patent Literature]

[Patent Literature 1] JP 2006-192465 A
[Patent Literature 2] JP 2015-044231 A

### [SUMMARY OF INVENTION]

In processing of a product having a notch in an outline, when the product is carried out by a product carrying-out device, the notch of the product interferes with an offcut, and the product may fail to be carried out. Therefore, a method is adopted in which an inside area of a notch, that is, a hole area including a notch in an outline is cut off as scrap. However, there is a risk that the scrap separated from a material rises, and there is a problem of interference with a carrying-out arm of the product carrying-out device.

A bending machine in accordance with an aspect of the present disclosure includes a laying-out unit configured to lay out, based on product data including a shape of a product, a cutting path through which a processing machine for laser cutting cuts the product from a material, wherein the laying-out unit is configured to: upon a notch being included in an outline of the product, set a joint to the product or an offcut, the joint being for connecting a hole area including the notch in an outline of the hole area; and lay out a cutting path to the outline of the hole area and the outline of the product excluding the notch so that a part of the outline of the hole area is left uncut depending on the joint.

According to an aspect of the present disclosure, the hole area is connected by a joint, so that the rise of the hole area can be suppressed.

According to an aspect of the present disclosure, when a product having a notch is processed, interference with the product carrying-out device can be suppressed. Thus, the success rate of carrying-out of the product can be improved.

### [BRIEF DESCRIPTION OF DRAWINGS]

[FIG. 1] FIG. 1 is a block diagram illustrating a configuration of an overall system including a lay-out data creation device according to an embodiment.
[FIG. 2] FIG. 2 is a diagram illustrating a shape of a product to which a cutting path is laid out.
[FIG. 3A] FIG. 3A is a diagram illustrating a joint.
[FIG. 3B] FIG. 3B is a diagram illustrating a joint.
[FIG. 4A] FIG. 4A is a diagram illustrating an example of an operation screen.
[FIG. 4B] FIG. 4B is a diagram illustrating an example of an operation screen.
[FIG. 5] FIG. 5 is a flowchart illustrating a flow of an automatic lay-out processing of a cutting path.
[FIG. 6A] FIG. 6A is a diagram schematically illustrating a joint set to a product.
[FIG. 6B] FIG. 6B is a diagram schematically illustrating a joint set to an offcut.
[FIG. 7] FIG. 7 is a diagram schematically illustrating a cutting path.
[FIG. 8] FIG. 8 is a diagram schematically illustrating a cutting path.
[FIG. 9] FIG. 9 is a diagram illustrating an example of an operation screen.
[FIG. 10] FIG. 10 is a view for explaining a lay-out state in which a notch is formed as a hole area.
[FIG. 11] FIG. 11 is a view illustrating a state in which a joint is set to a product.
[FIG. 12] FIG. 12 is a flowchart illustrating a flow of a lay-out processing of carrying-out arms.
[FIG. 13] FIG. 13 is an explanatory diagram illustrating a lay-out concept in which a product and an arm are suction targets.
[FIG. 14] FIG. 14 is an explanatory view illustrating a lay-out concept in which only a product is a suction target.
[FIG. 15A] FIG. 15A is a diagram for explaining an example of laid-out cutting paths.
[FIG. 15B] FIG. 15B is a diagram for explaining an example of laid-out cutting paths.

### [DESCRIPTION OF EMBODIMENTS]

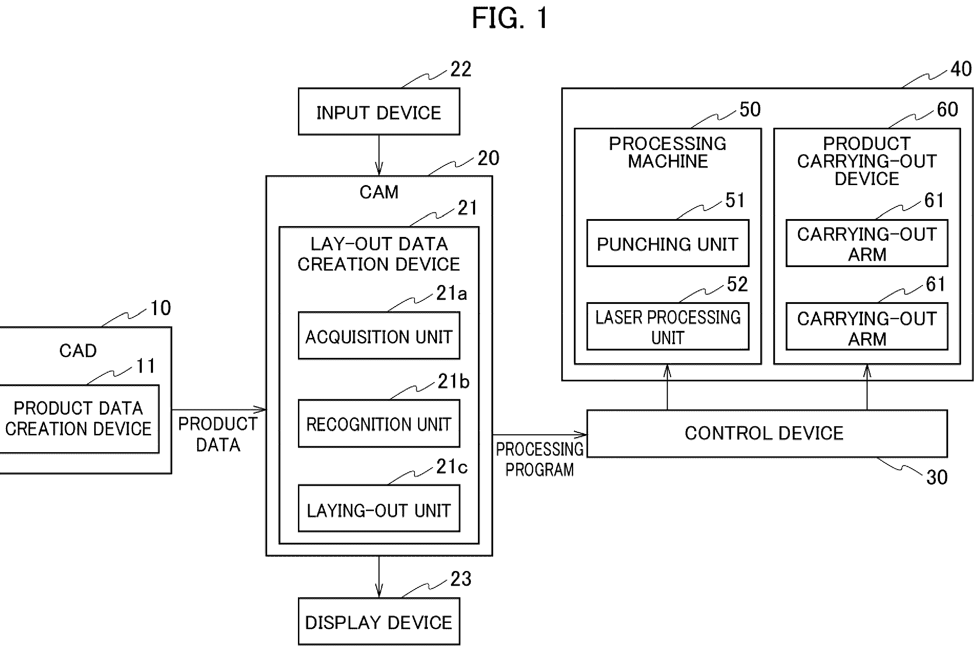

FIG. 1 is a block diagram illustrating a configuration of an overall system including a lay-out data creation device according to an embodiment. A lay-out data creation device 21 according to the present embodiment includes a laying-out unit 21c that lays out, based on product data including a shape of a product 100, a cutting path through which a processing machine 50 for laser cutting cuts the product 100 from a material 200. The laying-out unit 21c: in a case where a notch 111 is included in an outline 110 of the product 100, sets a point to the product 100 or an offcut 210, the joint 170 being for connecting a hole area 150 including the notch 111 in an outline 151 of the hole area 150; and lays out the cutting path to the outline 151 of the hole area 150 and the outline 110 of the product 100 excluding the notch 111 so that a part of the outline 151 of the hole area 150 is left uncut depending on the joint 170.

Hereinafter, the overall system will be described. The overall system is mainly configured by a CAD (Computer Aided Design) 10, a CAM (Computer Aided Manufacturing) 20, a control device 30, and a processing system 40.

The CAD 10 is a computer equipped with CAD functions. The CAD 10 is configured by a computer having a hardware processor such as a CPU (Central Processing Unit), a memory, and various interfaces. The memory and various interfaces are connected to the hardware processor via a bus. Various functions of the CAD 10 are achieved by causing the hardware processor to execute a program stored in a memory.

The CAD 10 functions as a product data creation device 11 by causing a computer program to be executed. The product data creation device 11 creates product data relating to the product to be cut from the material. The product data includes information such as a shape (graphic), size, and weight of the product. The product data created by the product data creation device 11 is input to the CAM 20.

The CAM 20 is a computer equipped with CAM functions. The CAM 20 is configured by a computer having a hardware processor such as a CPU, a memory, and various interfaces. The memory and various interfaces are connected to the hardware processor via a bus. Various functions of the CAM 20 are achieved by causing the hardware processor to execute a program stored in the memory.

The CAM 20 functions as the lay-out data creation device 21 by executing a computer program. The lay-out data creation device 21 creates data to be used by the control device 30 that controls the processing system 40. An input device 22 for inputting information to the lay-out data creation device 21 and a display device 23 for displaying information created by the lay-out data creation device 21 are connected to the lay-out data creation device 21.

Product data created by the product data creation device 11 is input to the lay-out data creation device 21. Material data or the like including a size, plate thickness and properties of the material 200 are input from the input device 22 to the lay-out data creation device 21. Device data including information on the processing system 40 is input to the lay-out data creation device 21. The device data may be acquired from the processing system 40 or may be acquired from an external device having information on the processing system 40.

The lay-out data creation device 21 creates lay-out data. The lay-out data is data in which a cutting path of a laser beam is laid out to the product (that is, a graphic illustrating the shape of the product). The lay-out data is also data in which carrying-out arms 61 are laid out to the product. The lay-out data creation device 21 creates a processing program based on the lay-out data. The processing program is configured by machine control codes by which the control device 30 controls the processing system 40.

The processing program created by the lay-out data creation device 21 is transferred to the control device 30. The lay-out data creation device 21 may store the created processing program in a database within a data management server (not illustrated). In this case, the control device 30 may read the processing program stored in the database of the data management server.

In relation to the present embodiment, the lay-out data creation device 21 includes an acquisition unit 21a, a recognition unit 21b, and the laying-out unit 21c. The acquisition unit 21a acquires the product data or the like. The recognition unit 21b recognizes the shape of the product based on the product data. The laying-out unit 21c creates the lay-out data based on the product data.

The control device 30 is a device for controlling the processing system 40 based on the processing program, and includes, for example, an NC device (a numerical control device). The control device 30 is configured by a computer having a hardware processor such as a CPU, a memory, and various interfaces. The memory and various interfaces are connected to the hardware processor via a bus. Various functions of the control device 30 are achieved by causing the hardware processor to execute a program stored in the memory.

For example, the control device 30 controls the processing machine 50 to cut out the product from the material based on the processing program. The product is produced by the processing machine 50 cutting out the product from the material. The control device 30 also controls the product carrying-out device 60 to carry out the product cut out from the material based on the processing program. By the product carrying-out device 60, the product is carried out. Then the product is stacked on a stacking pallet (not illustrated).

The processing system 40 includes the processing machine 50 and the carrying-out device 60.

The processing machine 50 includes a punching unit 51 and a laser processing unit 52. The punching unit 51 punches the material using a tool composed of a punch and a die. The laser processing unit 52 performs laser cutting on the material by a laser beam emitted from a processing head. The processing machine 50 may include only the laser processing unit 52.

The product carrying-out device 60 takes out the product that has been cut out of the material and carries out the product. The carrying-out of the product by the product carrying-out device 60 is performed each time the product is cut out of the material by the laser processing unit 52. The product carrying-out device 60 includes a pair of carrying-out arms 61 for taking out the product from the offcut that is the material from which the product has been cut out. A plurality of suction pads for suctioning the product are provided on a surface of each of the carrying-out arms 61 facing the material.

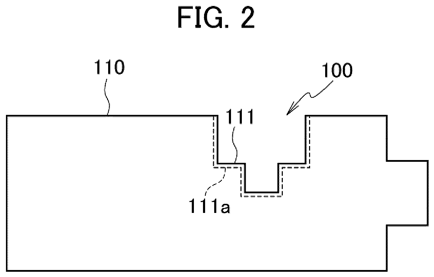

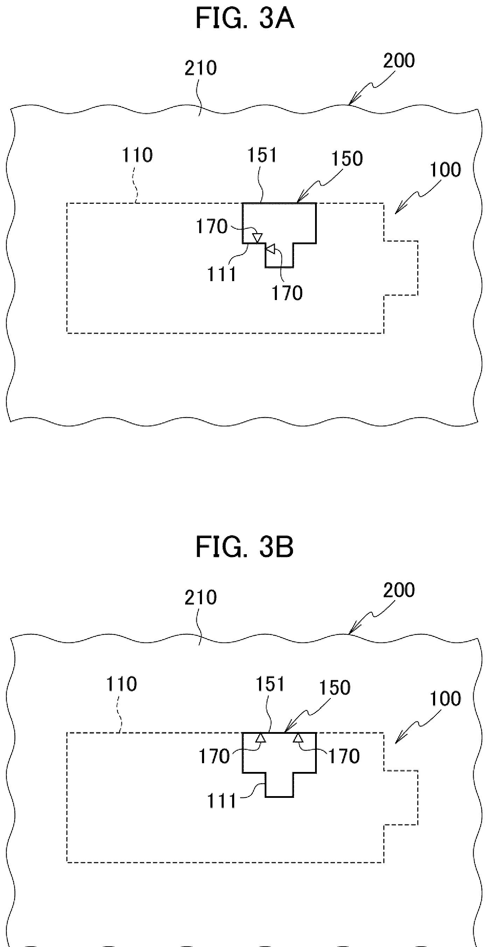

FIG. 2 is a diagram for explaining the shape of the product to which the cutting path is laid out. FIGS. 3A and 3B are diagrams for explaining the joint. Next, a lay-out processing in which the lay-out data creation device 21 lays out the cutting path to the product 100 will be described.

In the following description, the lay-out processing will be described with reference to the shape of the product 100 illustrated in FIG. 2. The shape of the product 100 is defined by the product data. The notch 111 is included in the outline 110 of the product 100. The notch 111 is a part of the outline 110 that is recessed towards the inside of the product 100. The notch 111 is also recognized as a cut-out formed by cutting out a part of the product 100. In FIG. 2, a reference line (dashed line) 111a is drawn along the notch 111 for easy understanding of the notch 111.

FIGS. 3A and 3B illustrate the joint. When the product 100 including the notch 111 in the outline 110 is cut out of the material 200 directly, the offcut 210 overlaps on the product 100 that has been cut out, and a transportation failure by the carrying-out arms 61 may occur. Therefore, when the product 100 is cut out of the material 200, the hole area 150 including the notch 111 in the outline 151 is cut in advance. The hole area 150 is an area adjacent to the inside of the notch 111, and is usually cut off as a skeleton.

As one of the features of the present embodiment, when the outline 151 of the hole area 150 is cut, the circumference of the outline 151 is not entirely cut, but is partly left uncut. The uncut portion is provided at a boundary line between the hole area 150 and the product 100 or a boundary line between the hole area 150 and the offcut 210. Therefore, the hole area 150 is connected to either the product 100 or the offcut 210 through the joint 170. FIG. 3A illustrates the joint 170 on the product 100, and FIG. 3B illustrates the joint 170 on the offcut 210.

Next, an automatic lay-out processing of automatically executing the lay-out processing using the lay-out data creation device 21 will be described.

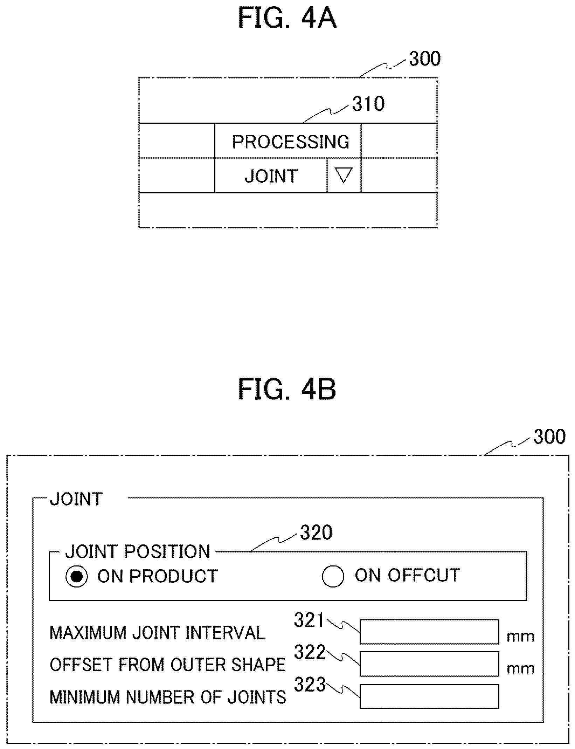

FIGS. 4A and 4B are diagrams illustrating an example of an operation screen. Prior to execution of the automatic lay-out processing, an operator inputs information necessary for the lay-out processing using the input device 22 according to the operation screen displayed on the display device 23.

As illustrated in FIG. 4A, the operator can select a processing condition for the notch 111 by operating an item 310 of "processing" on an operation screen 300. When "joint" is selected as a processing condition for the notch 111, the operator can lay out the cutting path that is connected to either the product 100 or the offcut 210 through the joint 170 without cutting off the hole area 150 as scrap.

When "joint" is selected as a processing condition, as illustrated in FIG. 4B, the operator selects a position of the joint 170 that are connected to the hole area 150 by operating an item 320 of "joint position". Specifically, the operator can select whether the joint 170 is set to "on product" or "on offcut".

In addition, as illustrated in FIG. 4B, the operator can input items 321, 322, and 323 for respective "maximum joint interval", "offset from outer shape", and "minimum number of joints" in numerical values. The item 321 of "maximum joint interval" is an item for specifying the maximum interval between adjacent joints 170. The item 322 of "offset from outer shape" is an item for defining how far the joint 170 is offset from a right or left end of the outer shape. The item 323 of the "minimum number of joints" is an item for specifying the minimum number of joints 170.

When the operator inputs necessary information using the input device 22 according to the operation screen 300 displayed on the display device 23, the automatic lay-out processing is executed by the lay-out data creation device 21.

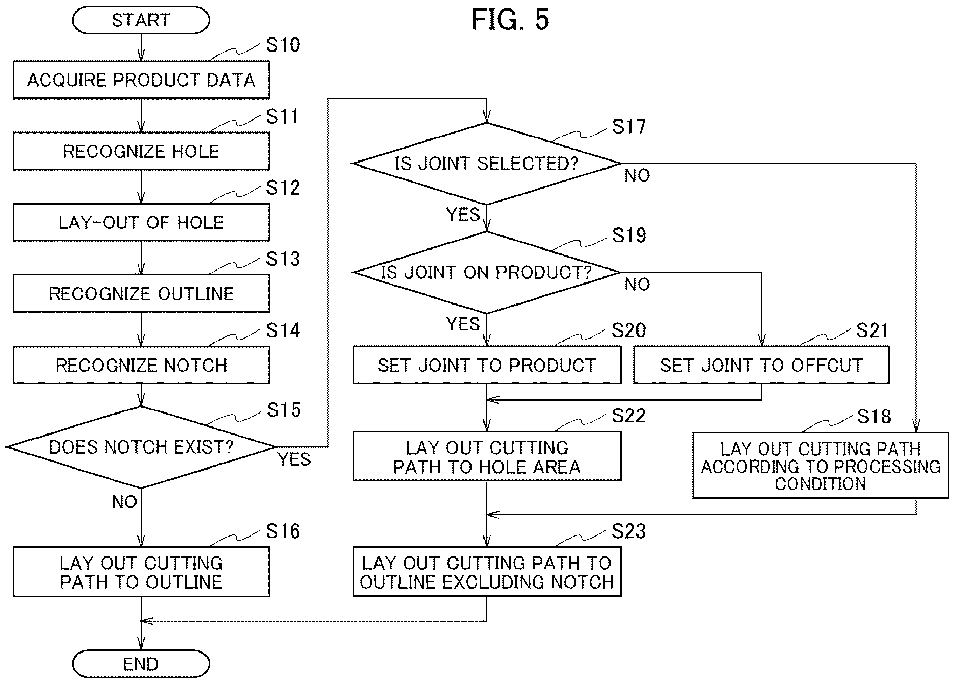

FIG. 5 is a flowchart illustrating a flow of the automatic lay-out processing of the cutting path. First, in step S10, the acquisition unit 21a acquires product data. For example, the acquisition unit 21a acquires the product data from the product data creation device 11. When the product data created by the product data creation device 11 is stored in a database within a data management server (not illustrated), the acquisition unit 21a may read the product data stored in the data management server.

In step S11, the recognition unit 21b recognizes a hole (opening) in the product 100 based on the product data. When a hole (opening) is recognized in the product 100, the laying-out unit 21c lays out the cutting path to the hole in step S12.

In step S13, the recognition unit 21b recognizes the outline 110 of the product 100 based on the product data. Then, in step S14, the recognition unit 21b recognizes the notch 111 in the outline 110.

In step S15, the laying-out unit 21c determines whether or not the notch 111 exists in the outline 110. The determination is made based on a recognition result of the recognition unit 21b in step S14. If there is no notch 111, proceed to processing in step S16, and if there is a notch 111, proceed to processing in step S17.

In step S16, the laying-out unit 21c lays out the cutting path to the outline 110 of the product 100. The cutting path is laid out to the outline 110 of the product 100 so as to be cut later than the hole in the product 100.

In step S17, the laying-out unit 21c determines whether or not the processing condition of the notch 111 is set to "joint". If the processing condition of the notch 111 is not set to "joint", proceed to step S18, and if the processing condition of the notch 111 is set to "joint", proceed to step S19.

In step S18, the laying-out unit 21c lays out the cutting path to the outline 151 of the hole area 150 in a method according to the processing condition of the notch. The cutting path is laid out to the outline 151 of the hole area 150 so as to be cut later than cutting of the hole in the product 100.

In step S19, the laying-out unit 21c determines whether or not the position of the joint 170 is on the product 100 based on an input for the item 320 of the "joint position". If the position of the joint 170 is on the product 100, proceed to step S20, and if the position of the joint 170 is on the offcut 210, proceed to step S21.

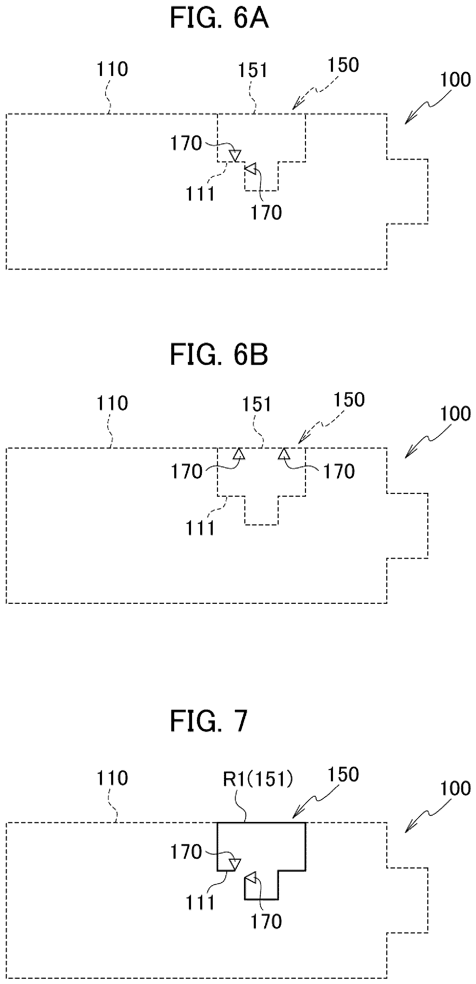

FIG. 6A is a diagram schematically illustrating the joint set to the product. In step S19, the laying-out unit 21c sets the joint 170 to the product 100. FIG. 6B is a diagram schematically illustrating the joint set to the offcut. In step S21, the laying-out unit 21c sets the joint 170 to the offcut 210. In each processing of steps S20 and S21, the laying-out unit 21c sets the number and position of the joint 170 so as to satisfy the instruction values input to the items 321, 322, and 323.

FIG. 7 is a diagram schematically illustrating the cutting path. In step S22, the laying-out unit 21c lays out a cutting path (a first cutting path) R1 to the outline 151 of the hole area 150 in consideration of the joint 170. The cutting path R1 is laid out so that a part of the outline 151 of the hole area 150 is left uncut depending on the joint 170. The cutting path R1 is laid out so as to be cut later than the hole in the product 100. It should be noted that the cutting path R1 includes a pierced hole, an approach, and a clearance, but these are omitted in FIG. 7 (the same applies hereinafter).

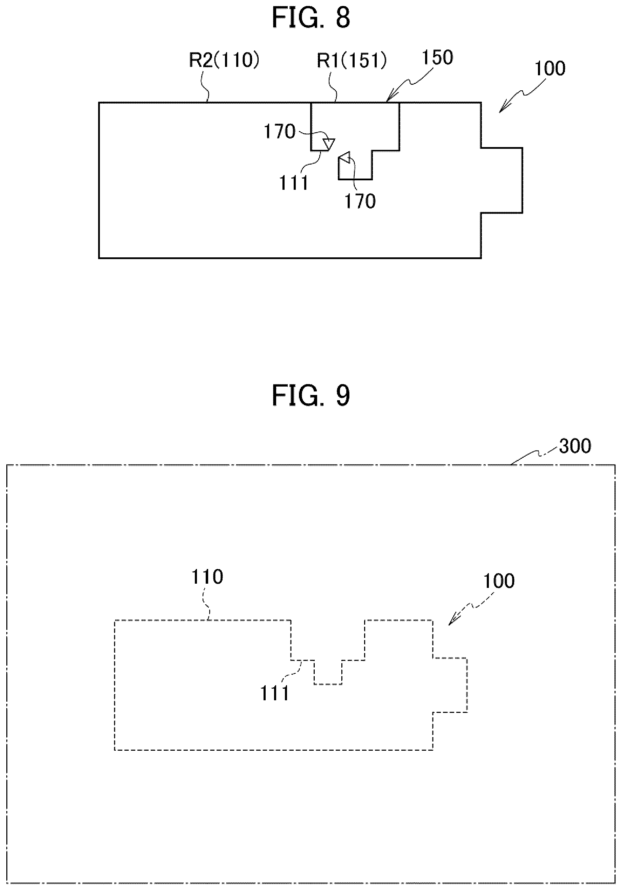

FIG. 8 is a diagram schematically illustrating the cutting path. In step S23, the laying-out unit 21c lays out a cutting path R2 to the outline 110 of the product 100 excluding the notch 111. The cutting path R2 is laid out so as to be cut later than the hole area 150.

After a series of such processes, the automatic lay-out processing ends.

Next, a manual lay-out processing in which the lay-out processing is performed manually using the lay-out data creation device 21 will be described.

When the manual lay-out processing is performed, an operator inputs information necessary for the manual lay-out processing using the input device 22 according to the operation screen displayed on the display device 23.

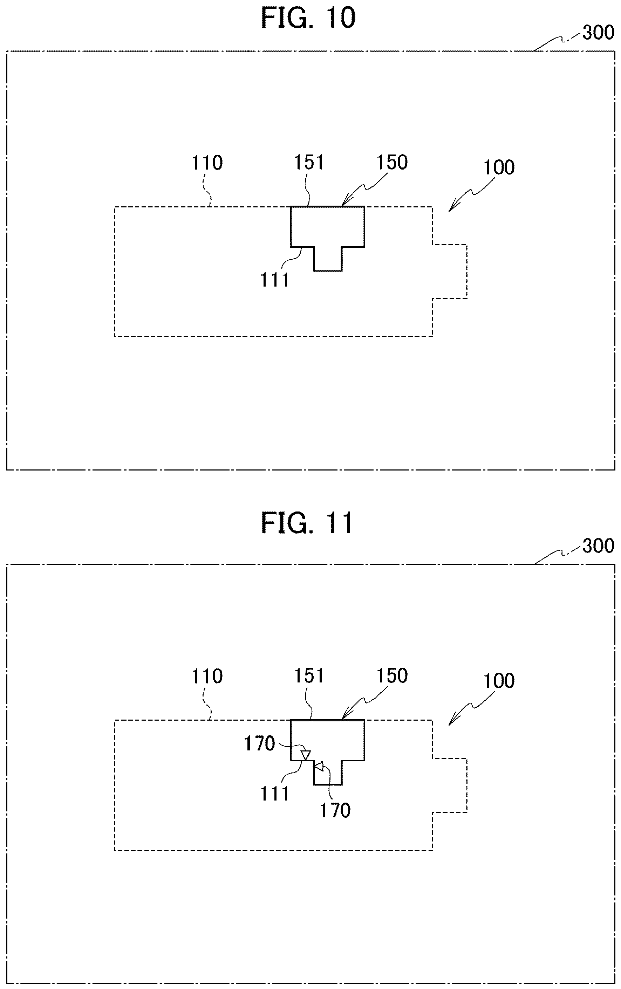

FIG. 9 is a diagram illustrating an example of an operation screen. FIG. 10 is a diagram for explaining a lay-out state in which the notch is formed as the hole area. FIG. 11 is a diagram illustrating a state in which the joint is set to the product.

On the operation screen 300 illustrated in FIG. 9, a graphic of the product 100 to which the cutting path is laid out is displayed. The product 100 displayed on the operation screen 300 has the notch 111 in the outline 110 of the product 100. For example, when the operator selects a line segment of the notch 111 on the operation screen 328, the notch 111 can be laid out as the hole area 150 as illustrated in FIG. 10.

In addition, the operator can specify any position on the outline 151 of the hole area 150 to set the joint 170. At this point, the operator can set any number of joints 170 to any position on either the product 100 or the offcut 210.

The flow after setting the joint 170 to the product 100 or the offcut 210 is the same as that of an automatic process. Thus, the lay-out processing of the cutting path by the manual lay-out processing ends.

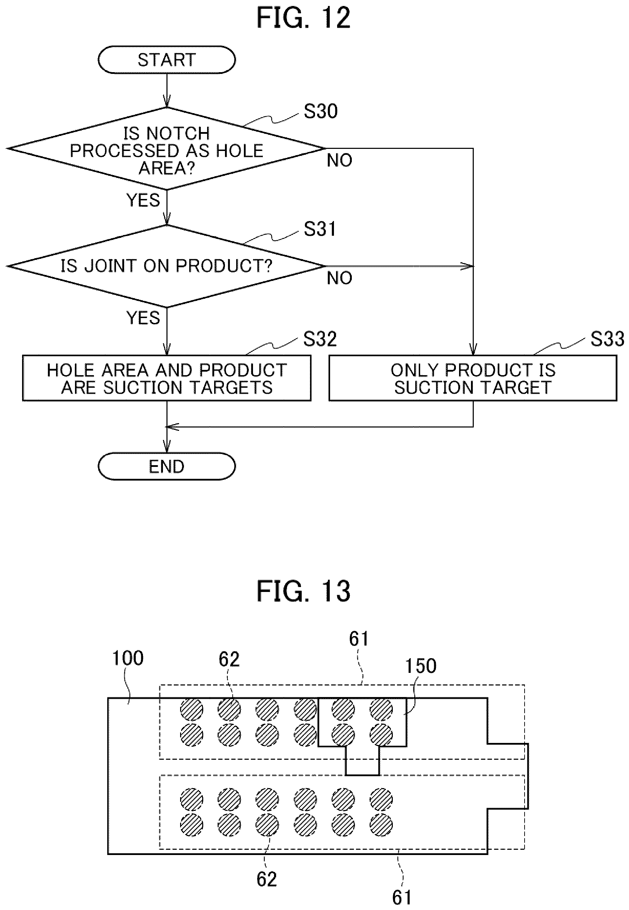

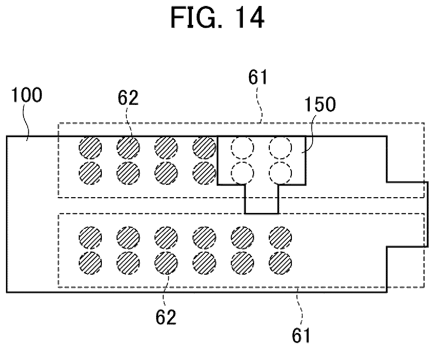

FIG. 12 is a flowchart illustrating a flow of a lay-out processing of the carrying-out arms. FIG. 13 is an explanatory diagram illustrating a lay-out concept in which the product and the hole area are suction targets. FIG. 14 is an explanatory diagram illustrating a lay-out concept in which only the product is a suction target.

The laying-out unit 21c performs the lay-out processing of laying out the carrying-out arms 61 to the product 100 in consideration of the above-described cutting path lay-out processing.

First, in step S30, the laying-out unit 21c determines whether or not the notch 111 is processed as the hole area 150. If it is processed as the hole area 150, proceed to step S31, and if it is not processed as the hole area 150, proceed to step S33, which will be described later.

In step S31, the laying-out unit 21c determines whether or not the joint 170 is on the product 100. When the joint 170 is on the product 100, proceed to step S32, and when the joint 170 is on the offcut 210, proceed to step S33.

In step S32, the laying-out unit 21c lays out the carrying-out arms 61 with both the product 100 and the hole area 150 as suction targets. The laying-out of the carrying-out arms 61 includes selecting the position of the carrying-out arms 61, and selecting suction pads 62 that perform suction operation among a plurality of suction pads 62 provided in the carrying-out arms 61. As illustrated by hatching in FIG. 13, in addition to the suction pads 62 laid out to the product 100, the suction pads 62 laid out to the hole area 150 are also set as pads that perform the suction operation.

In step S33, the laying-out unit 21c lays out the carrying-out arms 61 with only the product 100 as a suction target. The laying-out of the carrying-out arms 61 includes selecting the position of the carrying-out arms 61, and selecting the suction pads 62 that perform the suction operation among the plurality of suction pads 62 provided in the carrying-out arms 61. As illustrated by hatching in FIG. 14, only the suction pads 62 laid out on the product 100 are set as pads that perform the suction operation.

Lay-out data is created through such a laying-out processing. The lay-out data creation device 21 creates a processing program based on the lay-out data. The processing program created by the lay-out data creation device 21 is transferred to the control device 30.

The control device 30 controls the processing machine 50 so as to cut out the product 100 from the material 200 based on the processing program. The laser processing unit 52 of the processing machine 50 first cuts the outline 151 of the hole area 150. When cutting the outline 151 of the hole area 150, a circumference of the outline 151 is not entirely cut, but is partly left uncut. Thus, the hole area 150 is connected to either the product 100 or the offcut 210 through the joint 170.

Next, the laser processing unit 52 of the processing machine 50 cuts the outline 110 of the product 100 excluding the notch 111. At this point, the hole area 150 is connected to either the product 100 or the offcut 210 through the joint 170. Therefore, the rise of the hole area 150 is suppressed, so that interference with a processing head of the processing machine 50 can be prevented.

When the cutting of the product 100 is completed, the control device 30 controls the carrying-out device 60 to carry out the product 100 cut out from the material 200, based on the processing program. The carrying-out device 60 uses the pair of carrying-out arms 61 to take out the product 100 from the offcut 210. The rise of the hole area 150 is suppressed, so that interference with the pair of carrying-out arms 61 can be prevented.

In addition, the pair of carrying-out arms 61 operates according to the lay-out data. When the joint 170 is on the product 100, the product 100 and the hole area 150 are suctioned by the pair of carrying-out arms 61. The hole area 150 is also a suction target, so that the suction area is enlarged. Thus, the success rate of carrying-out can be improved.

On the other hand, when the joint 170 is on the offcut 210, only the product 100 is suctioned by the pair of carrying-out arms 61. In this case, the connection between the hole area 150 and the notch 111 is weakened, so that the notch 111 is less likely to be caught during the suction. Thus, the success rate of carrying-out can be improved.

Thus, according to the present embodiment, the hole area 150 is connected by the joint 170, so that the rise of the hole area 150 can be restricted. When the product 100 having the notch 111 is processed, the interference with the product carrying-out device 60 can be suppressed. Thus, the success rate of carrying-out of the product can be improved. According to the present embodiment, the hole area 150 is cut off in advance when the product 100 having the notch 111 is processed, so that the hole area 150 may rise. According to the present embodiment, the hole area 150 is connected by the joint 170, so that the rise of the hole area 150 can be restricted. Thus, interference of a processing head of the processing machine 50 with the product 100 can be suppressed. As a result, reduction in productivity due to stopped processing can be suppressed.

In the present embodiment, the laying-out unit 21c further lays out the carrying-out arms 61 for suctioning and carrying out the product cut out from the material 200, and lays out the carrying-out arms 61 with both the product 100 and the hole area 150 as suction targets in a case where the joint 170 is set to the product 100.

According to this configuration, the hole area 150 is also a suction target, so that the suction area is enlarged. Thus, the success rate of carrying-out by the product carrying-out device 60 can be improved.

In the present embodiment, the laying-out unit 21c further lays out the carrying-out arms 61 for suctioning and carrying out the product 100 cut out from the material 200, and lays out the carrying-out arms only with the product 100 as a suction target in a case where the joint 170 is set to the offcut 210.

According to this configuration, only the product 100 can be appropriately suctioned without suctioning the hole area 150 connected to the offcut 210. Further, the connection between the hole area 150 and the notch 111 is weakened, so that the notch 111 is less likely to be caught during suction. Thus, the success rate of carrying-out can be improved.

In the present embodiment, the lay-out data creation device 21 further includes the recognition unit 21b that recognizes the shape of the product 100. The laying-out unit 21c determines that the notch 111 is included in the outline 110 of the product 100 based on a recognition result by the recognition unit 21b.

According to this configuration, the laying-out unit 21c can set the hole area 150 and the joint 170 based on the notch 111 that has been recognized. Thus, the laying-out unit 21c can automatically perform the lay-out processing.

A lay-out data creation method according to the present embodiment includes: by a computer 20, performing a lay-out processing of laying out, based on the product data including the shape of the product 100, the cutting path through which the processing machine 50 for laser cutting cuts the product 100 from the material 200. The lay-out processing includes: in a case where the notch 111 is included in the outline 110 of the product 100, setting the joint 170 to the product 100 or the offcut 210, the joint 170 being for connecting the hole area 150 including the notch 111 in the outline 151 of the hole area 150; and laying out the cutting path to the outline 151 of the hole area 150 and the outline 110 of the product 100 excluding the notch 111 so that a part of the outline 151 of the hole area 150 is left uncut depending on the joint 170.

According to this method, the hole area 150 is connected by the joint 170, so that the rise of the hole area 150 can be restricted. Therefore, when the product 100 having the notch 111 is processed, interference with the processing machine 50 or the carrying-out device 60 can be suppressed. As a result, decrease in productivity due to stopped processing can be suppressed, and in addition, the success rate of carrying-out of the product can be improved.

A laser cutting method according to the present embodiment includes: a cutting process in which the processing machine 50 for laser cutting cuts the product 100 having the notch 111 in the outline 110 of the product 100, from the material 200; and a carrying-out process in which the carrying-out device 60 carries out the product 100 that has been cut from the material 200. The cutting process includes: cutting the hole area 150 including the notch 111 in the outline 151 of the hole area 150; and leaving a part of the outline 151 of the hole area 150 uncut so that the hole area 150 is connected to the product 100 or the offcut 210.

According to this method, the hole area 150 is connected to either the product 100 or the offcut 210 through the joint 170 at this point. Therefore, the rise of the hole area 150 is suppressed, so that interference with a processing head of the processing machine 50 can be prevented. In addition, the rise of the hole area 150 is restricted, so that interference with the pair of carrying-out arms 61 can be prevented. Thus, decrease in productivity due to stopped processing can be suppressed, and in addition, the success rate of carrying-out of the product 100 can be improved.

In the present embodiment, the laying-out unit 21c lays out the first cutting path R1 to the outline 151 of the hole area 150 so that a part of the outline 151 of the hole area 150 is left uncut depending on the joint 170, and lays out the second cutting path R2 different from the first cutting path R1 to the outline 110 of the product 100 excluding the notch 111. However, a laying-out manner of the cutting path is not limited to this, and the cutting path may be laid out to the outline 151 of the hole area 150 and the outline 110 of the product 100 excluding the notch 111 so that a part of the outline 151 of the hole area 150 is left uncut depending to the joint 170.

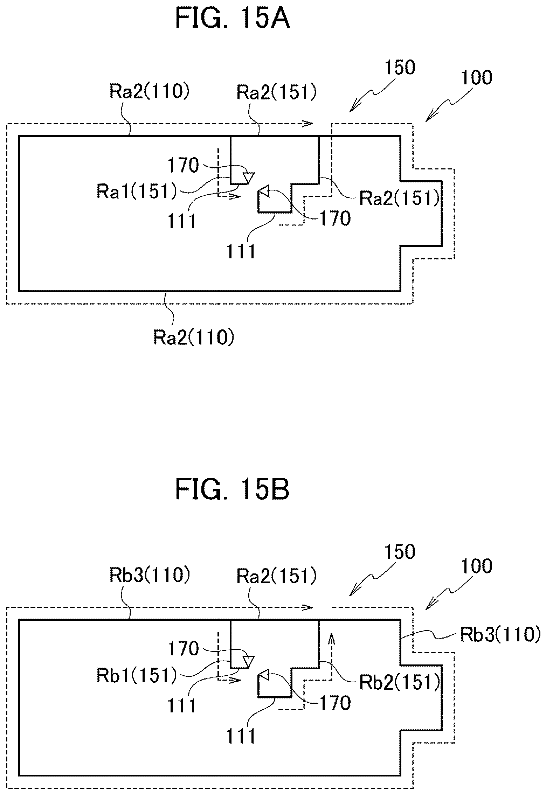

FIG. 15A is a diagram for explaining an example of laid-out cutting paths. For example, as illustrated in FIG. 15A, cutting paths laid out to the outline 151 of the hole area 150 and the outline 110 of the product 100 excluding the notch 111 may include the following two cutting paths Ra1 and Ra2. Here, the cutting path Ra1 is laid out to the outline 151 of the hole area extending from one end of the notch 111 to the joint 170. The cutting path Ra2 is laid out to the outline 151 of the hole area 150 extending from the joint 170 to the other end of the notch 111, the outline 110 of the product 100 excluding the notch 111, and the outline 151 of the hole area 150 excluding the notch 111.

FIG. 15B is a diagram for explaining an example of laid-out cutting paths. For example, as illustrated in FIG. 15B, the cutting paths laid out to the outline 151 of the hole area 150 and the outline 110 of the product 100 excluding the notch 111 may include three cutting paths Rb1, Rb2, and Rb3 as follows. Here, the cutting path Rb1 is laid out to the outline 151 of the hole area extending from one end of the notch 111 to the joint 170. The cutting path Rb2 is laid out to the outline 151 of the hole area 150 extending from the joint 170 to the other end of the notch 111. The cutting path Rb3 is laid out to the outline 110 of the product 100 excluding the notch 111 and the outline 151 of the hole area 150 excluding the notch 111.

Even with such a laying-out manner, interference with the carrying-out device 60 can be suppressed when the product 100 having the notch 111 is processed. Thus, the success rate of carrying-out of the product can be improved.

In the present embodiment, the lay-out data creation device 21 for creating lay-out data is implemented by the CAM 20. However, the lay-out data creation device 21 may be implemented by the control device 30. Thus, lay-out data can be created at a processing site.

## Claims

1. A lay-out data creation device (21) comprising:
a laying-out unit (21c) configured to lay out, based on product data including a shape of a product (100), a cutting path through which a processing machine (50) for laser cutting cuts the product (100) from a material (200),
**characterised in that**
the laying-out unit (21c) is configured to:
upon a notch (111) being included in an outline (110) of the product (100), set a joint (170) to the product (100) or an offcut (210), the joint (170) being for connecting a hole area (150) including the notch (111) in an outline (151) of the hole area (150); and
lay out the cutting path to the outline (151) of the hole area (150) and the outline (110) of the product (100) excluding the notch (111) so that a part of the outline (151) of the hole area (150) is left uncut depending on the joint (170).

2. The lay-out data creation device (21) according to claim 1, wherein the laying-out unit (21c) is configured to:
lay out a first cutting path (R1) to the outline (151) of the hole area (150) so that the part of the outline (151) of the hole area (150) is left uncut depending on the joint (170); and
lay out a second cutting path (R2) different from the first cutting path (R1) to the outline (110) of the product (100) excluding the notch (111).

3. The lay-out data creation device (21) according to claim 1, wherein the laying-out unit (21c) is configured to:
further lay out carrying-out arms (61) for suctioning and carrying out the product (100) cut out from the material (200); and
upon the joint (170) being set to the product (100), lay out the carrying-out arms (61) with both the product (100) and the hole area (150) as suction targets.

4. The lay-out data creation device (21) according to claim 1, wherein the laying-out unit (21c) is configured to:
further lay out carrying-out arms (61) for suctioning and carrying out the product (100) cut out from the material (200); and
upon the joint (170) being set to the offcut (210), lay out the carrying-out arms (61) only with the product (100) as a suction target.

5. The lay-out data creation device (21) according to any one of claims 1 to 4, further comprising a recognition unit (21b) configured to recognize the shape of the product (100) based on product data,
wherein the laying-out unit (21c) is configured to determine that the notch (111) is included in the outline (110) of the product (100) based on a recognition result by the recognition unit (21b).

6. A lay-out data creation method comprising:
by a computer (20), performing a lay-out processing of laying out, based on product data including a shape of the product (100), a cutting path through which a processing machine (50) for laser cutting cuts the product (100) from a material (200),
**characterised in that** the lay-out processing includes:
upon a notch (100) being included in an outline (110) of the product (100), setting a joint (170) to the product (100) or an offcut (210), the joint (170) being for connecting a hole area (150) including the notch (111) in an outline (151) of the hole area (150); and
laying out the cutting path to the outline (151) of the hole area (150) and the outline (110) of the product (100) excluding the notch (111) so that a part of the outline (151) of the hole area (150) is left uncut depending on the joint (170).

7. A laser cutting method comprising:
a cutting process of cutting a product (100) having a notch (111) in an outline (110) of the product (100) from a material (200) using a processing machine (50) for laser cutting; and
a carrying-out process of carrying out the product (100) that has been cut from the material (200) using a carrying-out device (60),
wherein the cutting process includes:
cutting a hole area (150) including the notch (111) in an outline (151) of the hole area (150); and
leaving a part of the outline (151) of the hole area (150) uncut so that the hole area (150) is connected to the product (100) or an offcut (210).

## Patentansprüche

1. Vorrichtung zur Erzeugung von Layoutdaten (21), umfassend:
eine Layout-Einheit (21c), die dazu eingerichtet ist, basierend auf Produktdaten, die eine Form eines Produkts (100) enthalten, einen Schneidpfad festzulegen, entlang dessen eine Bearbeitungsmaschine (50) zum Laserschneiden das Produkt (100) aus einem Material (200) schneidet,
**dadurch gekennzeichnet, dass** die Layout-Einheit (21c) dazu eingerichtet ist:
wenn eine Aussparung (111) in einer Kontur (110) des Produkts (100) enthalten ist, einen Verbindungssteg (170) an dem Produkt (100) oder einem Verschnittstück (210) festzulegen, wobei der Verbindungssteg (170) zum Verbinden eines Lochbereichs (150) dient, der die Aussparung (111) in einer Kontur (151) des Lochbereichs (150) enthält; und
den Schneidpfad an der Kontur (151) des Lochbereichs (150) und der Kontur (110) des Produkts (100) unter Ausschluss der Aussparung (111) so festzulegen, dass ein Teil der Kontur (151) des Lochbereichs (150) in Abhängigkeit von dem Verbindungssteg (170) ungeschnitten belassen wird.

2. Vorrichtung zur Erzeugung von Layoutdaten (21) nach Anspruch 1, wobei die Layout-Einheit (21c) dazu eingerichtet ist:
einen ersten Schneidpfad (R1) an der Kontur (151) des Lochbereichs (150) so festzulegen, dass der Teil der Kontur (151) des Lochbereichs (150) in Abhängigkeit von dem Verbindungssteg (170) ungeschnitten belassen wird; und
einen zweiten Schneidpfad (R2), der sich von dem ersten Schneidpfad (R1) unterscheidet, an der Kontur (110) des Produkts (100) unter Ausschluss der Aussparung (111) festzulegen.

3. Vorrichtung zur Erzeugung von Layoutdaten (21) nach Anspruch 1, wobei die Layout-Einheit (21c) dazu eingerichtet ist:
ferner Entnahmearme (61) zum Ansaugen und Entnehmen des aus dem Material (200) ausgeschnittenen Produkts (100) festzulegen; und
wenn der Verbindungssteg (170) an dem Produkt (100) festgelegt ist, die Entnahmearme (61) so festzulegen, dass sowohl das Produkt (100) als auch der Lochbereich (150) Ansaugziele sind.

4. Vorrichtung zur Erzeugung von Layoutdaten (21) nach Anspruch 1, wobei die Layout-Einheit (21c) dazu eingerichtet ist:
ferner Entnahmearme (61) zum Ansaugen und Entnehmen des aus dem Material (200) ausgeschnittenen Produkts (100) festzulegen; und
wenn der Verbindungssteg (170) an dem Verschnittstück (210) festgelegt ist, die Entnahmearme (61) so festzulegen, dass nur das Produkt (100) ein Ansaugziel ist.

5. Vorrichtung zur Erzeugung von Layoutdaten (21) nach einem der Ansprüche 1 bis 4, ferner umfassend eine Erkennungseinheit (21b), die dazu eingerichtet ist, die Form des Produkts (100) basierend auf Produktdaten zu erkennen,
wobei die Layout-Einheit (21c) dazu eingerichtet ist, auf Grundlage eines Erkennungsergebnisses der Erkennungseinheit (21b) zu bestimmen, dass die Aussparung (111) in der Kontur (110) des Produkts (100) enthalten ist.

6. Verfahren zur Erzeugung von Layoutdaten, umfassend:
Durchführen, mittels eines Computers (20), einer Layout-Verarbeitung zum Festlegen, basierend auf Produktdaten, die eine Form des Produkts (100) enthalten, eines Schneidpfads, entlang dessen eine Bearbeitungsmaschine (50) zum Laserschneiden das Produkt (100) aus einem Material (200) schneidet,
**dadurch gekennzeichnet, dass** die Layout-Verarbeitung umfasst:
wenn eine Aussparung (100) in einer Kontur (110) des Produkts (100) enthalten ist, Festlegen eines Verbindungsstegs (170) an dem Produkt (100) oder einem Verschnittstück (210), wobei der Verbindungssteg (170) zum Verbinden eines Lochbereichs (150) dient, der die Aussparung (111) in einer Kontur (151) des Lochbereichs (150) enthält; und
Festlegen des Schneidpfads an der Kontur (151) des Lochbereichs (150) und der Kontur (110) des Produkts (100) unter Ausschluss der Aussparung (111) derart, dass ein Teil der Kontur (151) des Lochbereichs (150) in Abhängigkeit von dem Verbindungssteg (170) ungeschnitten belassen wird.

7. Laserschneidverfahren, umfassend:
einen Schneidvorgang zum Schneiden eines Produkts (100), das eine Aussparung (111) in einer Kontur (110) des Produkts (100) aufweist, aus einem Material (200) unter Verwendung einer Bearbeitungsmaschine (50) zum Laserschneiden; und
einen Entnahmevorgang zum Entnehmen des Produkts (100), das aus dem Material (200) ausgeschnitten worden ist, unter Verwendung einer Entnahmevorrichtung (60),
wobei der Schneidvorgang umfasst:
Schneiden eines Lochbereichs (150), der die Aussparung (111) in einer Kontur (151) des Lochbereichs (150) enthält; und
Belassen eines Teils der Kontur (151) des Lochbereichs (150) ungeschnitten, sodass der Lochbereich (150) mit dem Produkt (100) oder einem Verschnittstück (210) verbunden ist.

## Revendications

1. Dispositif de création de données de tracé (21), comprenant :
une unité de tracé (21c) configurée pour tracer, sur la base de données de produit comprenant une forme d'un produit (100), un trajet de découpe suivant lequel une machine de traitement (50) destinée à la découpe laser découpe le produit (100) dans un matériau (200),
**caractérisé en ce que** l'unité de tracé (21c) est configurée pour :
lorsqu'une encoche (111) est comprise dans un contour (110) du produit (100), définir un pont de liaison (170) sur le produit (100) ou une chute (210), le pont de liaison (170) étant destiné à relier une zone de trou (150) comprenant l'encoche (111) dans un contour (151) de la zone de trou (150) ; et
tracer le trajet de découpe le long du contour (151) de la zone de trou (150) et du contour (110) du produit (100), à l'exclusion de l'encoche (111), de manière qu'une partie du contour (151) de la zone de trou (150) soit laissée non découpée en fonction du pont de liaison (170).

2. Dispositif de création de données de tracé (21) selon la revendication 1, dans lequel l'unité de tracé (21c) est configurée pour :
tracer un premier trajet de découpe (R1) le long du contour (151) de la zone de trou (150) de manière que la partie du contour (151) de la zone de trou (150) soit laissée non découpée en fonction du pont de liaison (170) ; et
tracer un second trajet de découpe (R2), différent du premier trajet de découpe (R1), le long du contour (110) du produit (100), à l'exclusion de l'encoche (111).

3. Dispositif de création de données de tracé (21) selon la revendication 1, dans lequel l'unité de tracé (21c) est configurée pour :
tracer en outre des bras d'extraction (61) destinés à aspirer et à extraire le produit (100) découpé dans le matériau (200) ; et
lorsque le pont de liaison (170) est défini sur le produit (100), tracer les bras d'extraction (61) avec à la fois le produit (100) et la zone de trou (150) comme cibles d'aspiration.

4. Dispositif de création de données de tracé (21) selon la revendication 1, dans lequel l'unité de tracé (21c) est configurée pour :
tracer en outre des bras d'extraction (61) destinés à aspirer et à extraire le produit (100) découpé dans le matériau (200) ; et
lorsque le pont de liaison (170) est défini sur la chute (210), tracer les bras d'extraction (61) avec uniquement le produit (100) comme cible d'aspiration.

5. Dispositif de création de données de tracé (21) selon l'une quelconque des revendications 1 à 4, comprenant en outre une unité de reconnaissance (21b) configurée pour reconnaître la forme du produit (100) sur la base de données de produit,
dans lequel l'unité de tracé (21c) est configurée pour déterminer que l'encoche (111) est comprise dans le contour (110) du produit (100) sur la base d'un résultat de reconnaissance obtenu par l'unité de reconnaissance (21b).

6. Procédé de création de données de tracé, comprenant :
l'exécution, par un ordinateur (20), d'un traitement de tracé consistant à tracer, sur la base de données de produit comprenant une forme du produit (100), un trajet de découpe suivant lequel une machine de traitement (50) destinée à la découpe laser découpe le produit (100) dans un matériau (200),
**caractérisé en ce que** le traitement de tracé comprend :
lorsqu'une encoche (100) est comprise dans un contour (110) du produit (100), la définition d'un pont de liaison (170) sur le produit (100) ou une chute (210), le pont de liaison (170) étant destiné à relier une zone de trou (150) comprenant l'encoche (111) dans un contour (151) de la zone de trou (150) ; et
le tracé du trajet de découpe le long du contour (151) de la zone de trou (150) et du contour (110) du produit (100), à l'exclusion de l'encoche (111), de manière qu'une partie du contour (151) de la zone de trou (150) soit laissée non découpée en fonction du pont de liaison (170).

7. Procédé de découpe laser, comprenant :
un processus de découpe consistant à découper, dans un matériau (200), un produit (100) ayant une encoche (111) dans un contour (110) du produit (100), à l'aide d'une machine de traitement (50) destinée à la découpe laser ; et
un processus d'extraction consistant à extraire le produit (100) qui a été découpé dans le matériau (200) à l'aide d'un dispositif d'extraction (60),
dans lequel le processus de découpe comprend :
la découpe d'une zone de trou (150) comprenant l'encoche (111) dans un contour (151) de la zone de trou (150) ; et
le fait de laisser une partie du contour (151) de la zone de trou (150) non découpée de manière que la zone de trou (150) soit reliée au produit (100) ou à une chute (210).
